# EUROPÄISCHE PATENTANMELDUNG

(11) **EP 4 234 419 A1**
(43) Veröffentlichungstag der Anmeldung: **30.08.2023**
(21) Anmeldenummer: 23154886.8
(22) Anmeldetag: 03.02.2023
(51) Int. Cl.: B65B 9/15, B65B 39/06, B65B 43/42, B65B 55/02, B65B 67/02, B67C 3/26, G01N 1/20

(54) **BEFÜLLVORRICHTUNG, PROBENEHMERANSCHLUSSVORRICHTUNG MIT EINER SOLCHEN BEFÜLLVORRICHTUNG SOWIE ENTSPRECHENDES VERFAHREN**

(30) Priorität: 03.02.2022 DE 102022102626
(71) Anmelder: Hecht Technologie GmbH, 85276 Pfaffenhofen (DE)
(72) Erfinder: HEINZINGER, Josef, 85276 Pfaffenhofen (DE)
(74) Vertreter: Kilian Kilian & Partner

(57) **Zusammenfassung**

Die Erfindung betrifft eine Befüllvorrichtung zum Befüllen eines Behälters zur Aufnahme einer Probe eines Produkts, aufweisend: eine Befülleinrichtung mit einem ersten Durchgang, über den ein erster Behälter mit einer Probe eines Produkts befüllt werden kann, wobei die Befülleinrichtung einen zweiten Durchgang aufweist, der derart ausgestaltet ist, dass der erste Behälter in den zweiten Durchgang eingeführt werden kann, um den zweiten Durchgang hermetisch zu verschließen, und/oder dass der erste Behälter durch den zweiten Durchgang durchgeschoben werden kann, um über den ersten Durchgang befüllt zu werden.

Weiterhin bezieht sich die Erfindung auf ein entsprechendes Verfahren zum Betreiben und Reinigen einer solchen Befüllvorrichtung sowie eine Probenehmeranschlussvorrichtung mit einer solchen Befüllvorrichtung.

## Beschreibung

Die Erfindung betrifft eine Befüllvorrichtung zum Befüllen eines Behälters zur Aufnahme einer Probe eines Produkts sowie eine Probenehmeranschlussvorrichtung mit einer solchen Befüllvorrichtung.

Ferner bezieht sich die Erfindung auf ein Verfahren zum Betreiben einer solchen Befüllvorrichtung sowie ein Verfahren zur Reinigung einer solchen Befüllvorrichtung.

Eine herkömmliche Probenehmeranschlussvorrichtung wird üblicherweise an ein Produktabgaberohr eines Probenehmers angeschlossen, um über die Probenehmeranschlussvorrichtung das von dem Probenehmer stammende Produkt abzupacken, d.h. das von dem Probenehmer stammende Produkt in entsprechenden Behältern kontaminationslos aufzunehmen bzw. diese zu befüllen. Hierzu wird in der Regel ein Behälter an ein Produktfallrohr der Probenehmeranschlussvorrichtung angeschlossen, mit dem von dem Probenehmer stammenden Produkt befüllt und schließlich verschlossen, wobei sich der Behälter während der Abfüllung wiederum in einem hermetisch verschlossenen Beutel befindet, um das Produkt in dem verschlossenen Behälter letztlich kontaminationsfrei entnehmen zu können. Dies gestaltet sich bei der herkömmlichen Probenehmeranschlussvorrichtung sehr aufwendig, wenn mehrere Behälter befüllt werden sollen. Der Erfindung liegt daher die Aufgabe zugrunde, die gattungsgemäßen Befüllvorrichtungen, Probenehmeranschlussvorrichtungen und Verfahren derart weiterzubilden, dass die kontaminationsfreie Produktentnahme effizienter gestaltet werden kann.

Diese Aufgabe wird durch die Merkmale der unabhängigen Ansprüche gelöst. Vorteilhafte Ausgestaltungen und Weiterbildungen der Erfindung ergeben sich aus den abhängigen Ansprüchen.

Die erfindungsgemäße Befüllvorrichtung ist zum Befüllen eines Behälters zur Aufnahme einer Probe eines Produkts eingerichtet und weist auf:
eine Befülleinrichtung mit einem ersten Durchgang, über den ein erster Behälter mit einer Probe eines Produkts befüllt werden kann, wobei die Befülleinrichtung einen zweiten Durchgang aufweist, der derart ausgestaltet ist, dass der erste Behälter in den zweiten Durchgang eingeführt werden kann, um den zweiten Durchgang hermetisch zu verschließen und/oder dass der erste Behälter durch den zweiten Durchgang durchgeschoben werden kann, um über den ersten Durchgang befüllt zu werden. Bei der erfindungsgemäßen Befüllvorrichtung handelt es sich insbesondere um eine Befüllvorrichtung, welche an einen sog. Containment-Probenehmer angeschlossen werden kann, wobei die Befüllvorichtung aufgrund des so ausgestalteten zweiten Durchgangs eine Push-through-Behälter- bzw. Flaschenaufgabefuntion verwirklichen kann. Insbesondere kann die derart ausgestaltete Befüllvorrichtung somit kompakt zum sicheren Einschleusen von definierten, zylindrischen Behältern in Form von Probenahmeflaschen ausgebildet sein, welche beispielsweise 500ml-Flaschen sein können. Die erfindungsgemäße Befüllvorrichtung umfasst somit den zweiten Durchgang in Form eines Push-through-Rohrs zum Einbringen der Behälter in Form von Probenahmeflaschen. In dem als Rohr ausgeführten zweiten Durchgang sind mindestens zwei räumlich voneinander getrennte, insbesondere in Axialrichtung des Durchgangs voneinander getrennte Dichtungselemente angeordnet, die bevorzugt als zwei Clampdichtungen mit reduziertem Innendurchmesser ausgebildet sind, so dass der zweite Durchgang bei bei eingeschobenem Behälter in Form einer Probenahmeflasche abgedichtet ist bzw. hermetisch verschlossen ist. Neben dem zweiten Durchgang in Form des Push-through-Rohr befindet sich weiterhin der erste Durchgang in Form eines Produktfallrohrs, das mit einem Triclamp-Anschluss an einem äußeren Endabschnitt ausgerüstet ist und somit mit Hilfe eines externen zusätzlichen Rohrstücks an einen Schlittenprobenehmer oder Schneckenprobenehmer angeschlossen werden kann.

Die erfindungsgemäße Befüllvorrichtung kann in vorteilhafter Weise derart weitergebildet werden, dass der zweite Durchgang derart ausgestaltet ist, dass der in den zweiten Durchgang eingeführte erste Behälter innerhalb des zweiten Durchgangs in eine erste Dichtungsposition, eine zweite Dichtungsposition und eine dritte Dichtungsposition verschiebbar ist, in denen der erste Behälter den zweiten Durchgang hermetisch verschließt, indem der erste Behälter in Abhängigkeit von der jeweiligen Dichtungsposition mit einem unterschiedlichen Dichtungselement oder mehreren unterschiedlichen Dichtungselementen in Wirkverbindung steht.

Weiterhin kann die erfindungsgemäße Befüllvorrichtung so ausgebildet sein, dass in dem zweiten Durchgang zumindest zwei in einem vorbestimmten Abstand zueinander angeordnete Dichtungselemente in Axialrichtung des zweiten Durchgangs angeordnet sind, die derart voneinander beabstandet sind, dass der erste Behälter in der ersten Dichtungsposition in Zusammenwirken mit nur dem einen der zumindest zwei Dichtungselemente den zweiten Durchgang hermetisch verschließt, in der zweiten Dichtungsposition in Zusammenwirken mit den zumindest zwei Dichtungselementen den zweiten Durchgang hermetisch verschließt, und in der dritten Dichtungsposition in Zusammenwirken mit nur dem anderen der zumindest zwei Dichtungselemente den zweiten Durchgang hermetisch verschließt

Darüber hinaus kann die erfindungsgemäße Befüllvorrichtung derart weitergebildet werden, dass der zweite Durchgang derart ausgebildet ist, dass bei in zweiter Dichtungsposition befindlichem ersten Behälter und bei Einführen eines zweiten Behälters in den zweiten Durchgang und Verschieben in die erste Dichtungsposition der erste Behälter von der zweiten Dichtungsposition in die dritte Dichtungsposition geschoben wird, so dass sowohl der zweite Behälter in der ersten Dichtungsposition als auch der erste Behälter in der dritten Dichtungsposition mit einem jeweiligen Dichtungselement zusammenwirken, um den zweiten Durchgang hermetisch zu verschließen.

Ferner kann die erfindungsgemäße Befüllvorrichtung so verwirklicht werden, dass der zweite Durchgang derart ausgebildet ist, dass bei in zweiter Dichtungsposition befindlichem ersten oder zweiten Behälter der zweite Durchgang ausschließlich über nur einen Behälter hermetisch verschließbar ist.

Überdies kann die erfindungsgemäße Befüllvorrichtung derart umgesetzt werden, dass die Dichtungselemente durch Clampdichtungen gebildet werden. Die sog. Clampdichtungen sind in dem zweiten Durchgang vorgesehene umlaufende Dichtungen mit geringerem Durchmesser als der zweite Durchgang. Damit weisen die Clampdichtungen neben ihrer üblichen Dichtungsfunktion auch eine Art Haltefunktion für den eingeschobenen ersten oder zweiten Behälter auf.

Des Weiteren kann die erfindungsgemäße Befüllvorrichtung so ausgestaltet werden, dass die Befülleinrichtung als Anschlusskopf ausgebildet ist, der den ersten Durchgang und den zweiten Durchgang aufweist, wobei der Anschlusskopf weiterhin eine Halterungseinrichtung zum Haltern eines flexiblen Behältnisses aufweist, in das der erste Durchgang und der zweite Durchgang münden. Der Anschlusskopf ist somit auch als Linerträger oder Folienträger ausgebildet, wobei ein zylindrisches Außenrohr des Anschlusskopfs mittels eines Bajonettverschlusses an Führungsbolzen gelagert und somit translatorisch in Bezug auf den den ersten und zweiten Durchgang bildenden Teil des Anschlusskopfs bewegbar bzw. verschiebbar ist. Dabei ist vorzugsweise ein Ausschnitt des Außenrohrs ausgespart, so dass die Aussparung als eine Art Sichtfenster zur Kontrolle des Linerpakets bzw. Folienpaket dienen kann.

Zudem kann die erfindungsgemäße Befüllvorrichtung derart weitergebildet werden, dass der Anschlusskopf eine Einrichtung zum Lösen und Befestigen bzw. Haltern eines Deckels eines Behälters und/oder eine Befestigungseinrichtung zum Befestigen eines offenen Behälters an dem ersten Durchgang aufweist. Vorzugsweise weist der Anschlusskopf an dessen Unterseite eine Grundplatte auf, in die der erste und zweite Durchgang münden und an welcher ein Deckelhalter als eine Einrichtung zum Lösen und Befestigen bzw. Haltern eines Deckels eines Behälters sowie ein Flaschenhalter zur korrekten Positionierung der Flaschen unter dem als Produkt-Fallrohr ausgebildeten ersten Durchgang vorgesehen sind.

Die erfindungsgemäße Probenehmeranschlussvorrichtung zur kontaminationsfreien Entnahme einer Probe eines Produkts aus einem Behältnis weist auf:
die erfindungsgemäße Befüllvorrichtung und ein Behältnis zur Aufnahme einer Probe.

Das erfindungsgemäße Verfahren zum Betreiben einer Befüllvorrichtung zum Befüllen eines Behälters zur Aufnahme einer Probe eines Produkts, vorzugsweise der erfindungsgemäßen Befüllvorrichtung nach einem oder mehreren der vorgenannten Aspekte, weist die folgenden Schritte auf:
einen Behälterbefüllungsschritt, bei dem ein erster Behälter mit einem ersten Durchgang der Befülleinrichtung verbunden wird, um den ersten Behälter über den ersten Durchgang mit einer Probe zu befüllen,
wobei vor dem Behälterbefüllungsschritt ein Behältereinführungsschritt durchgeführt wird, bei dem der erste Behälter zunächst in einen zweiten Durchgang der Befülleinrichtung eingeführt wird, um den zweiten Durchgang hermetisch zu verschließen, und/oder bei dem der erste Behälter durch den zweiten Durchgang durchgeschoben wird, um in dem Behälterbefüllungsschritt über den ersten Durchgang befüllt zu werden.

Dadurch ergeben sich die im Zusammenhang mit der erfindungsgemäßen Befüllvorrichtung erläuterten Eigenschaften und Vorteile auf gleiche oder ähnliche Weise, weshalb zu Vermeidung von Wiederholungen auf die vorstehenden Ausführungen im Zusammenhang mit der erfindungsgemäßen Befüllvorrichtung verwiesen wird. Gleiches gilt sinngemäß auch für die folgende Ausführungsform des erfindungsgemäßen Verfahrens, weshalb auch diesbezüglich auf die vorstehenden Ausführungen im Zusammenhang mit der erfindungsgemäßen Befüllvorrichtung verwiesen wird.

Das erfindungsgemäße Verfahren kann dabei in vorteilhafter Weise derart durchgeführt werden, in dem Behältereinführungsschritt weiterhin ein zweiter Behälter in den zweiten Durchgang eingeführt wird, so dass zunächst der erste und der zweite Behälter den zweiten Durchgang hermetisch verschließen, wobei bei weiterem Einführen des zweiten Behälters in den zweiten Durchgang der erste Behälter aus dem zweiten Durchgang herausgeführt wird und ausschließlich der zweite Behälter den zweiten Durchgang hermetisch verschließt.

Das erfindungsgemäße Verfahren zum Reinigen einer Befüllvorrichtung zum Befüllen eines Behälters zur Aufnahme einer Probe eines Produkts, vorzugsweise einer Befüllvorrichtung gemäß einem der vorangehenden Aspekte, weist die folgenden Schritte auf:
einen Behältereinführungsschritt, bei dem ein erster Behälter, der ausgebildet ist, mit einem ersten Durchgang der Befülleinrichtung verbunden zu werden, um den ersten Behälter über den ersten Durchgang mit einer Probe zu befüllen, in einen zweiten Durchgang der Befülleinrichtung eingeführt wird, um den zweiten Durchgang hermetisch zu verschließen, und einen Reinigungsschritt, bei dem eine Reinigungseinrichtung in den zweiten Durchgang eingeführt wird, um den zweiten Durchgang hermetisch zu verschließen, und bei deren Einführung in den zweiten Durchgang der erste Behälter abschnittsweise oder vollständig aus dem zweiten Durchgang geschoben wird.

Eine bevorzugte Ausführungsform der Erfindung wird nachfolgend anhand der Figuren beispielhaft erläutert.

Es zeigen:
- Figur 1: eine schematische Darstellung einer erfindungsgemäßen Probenehmeranschlussvorrichtung mit einer erfindungsgemäßen Befüllvorrichtung in einer Frontansicht;
- Figur 2: eine schematische Darstellung der erfindungsgemäßen Befüllvorrichtung von Fig. 1 in einer Schnittansicht bei einem Vorbereitungsschritt;
- Figur 3: eine schematische Darstellung der erfindungsgemäßen Befüllvorrichtung von Fig. 2 in einer Schnittansicht im weiteren Verlauf des Vorbereitungsschritts;
- Figur 4: eine schematische Darstellung der erfindungsgemäßen Befüllvorrichtung von Fig. 1 in einer Schnittansicht bei einem Behältereinführungsschritt;
- Figur 5: eine schematische Darstellung der erfindungsgemäßen Befüllvorrichtung von Fig. 4 in einer Schnittansicht im weiteren Verlauf des Behältereinführungsschritts;
- Figur 6: eine schematische Darstellung der erfindungsgemäßen Befüllvorrichtung von Fig. 5 in einer Schnittansicht im weiteren Verlauf des Behältereinführungsschritts;
- Figur 7: eine schematische Darstellung der erfindungsgemäßen Befüllvorrichtung von Fig. 1 in einer Ansicht von unten;
- Figur 8: eine schematische Darstellung der erfindungsgemäßen Befüllvorrichtung von Fig. 1 in einer Schnittansicht bei einem Reinigungsschritt;
- Figur 9: eine schematische Darstellung der erfindungsgemäßen Befüllvorrichtung von Fig. 8 in einer Schnittansicht im weiteren Verlauf des Reinigungsschritts;
- Figur 10: eine schematische Darstellung der erfindungsgemäßen Befüllvorrichtung von Fig. 9 in einer Schnittansicht im weiteren Verlauf des Reinigungsschritts;
- Figur 11: eine schematische Darstellung der erfindungsgemäßen Befüllvorrichtung von Fig. 1 in einer Schnittansicht bei einem Behältniswechselschritt;
- Figur 12: eine schematische Darstellung der erfindungsgemäßen Befüllvorrichtung von Fig. 11 in einer Schnittansicht im weiteren Verlauf des Behältniswechselschritts; und
- Figur 13: eine schematische Darstellung der erfindungsgemäßen Befüllvorrichtung von Fig. 12 in einer Schnittansicht im weiteren Verlauf des Behältniswechselschritts.

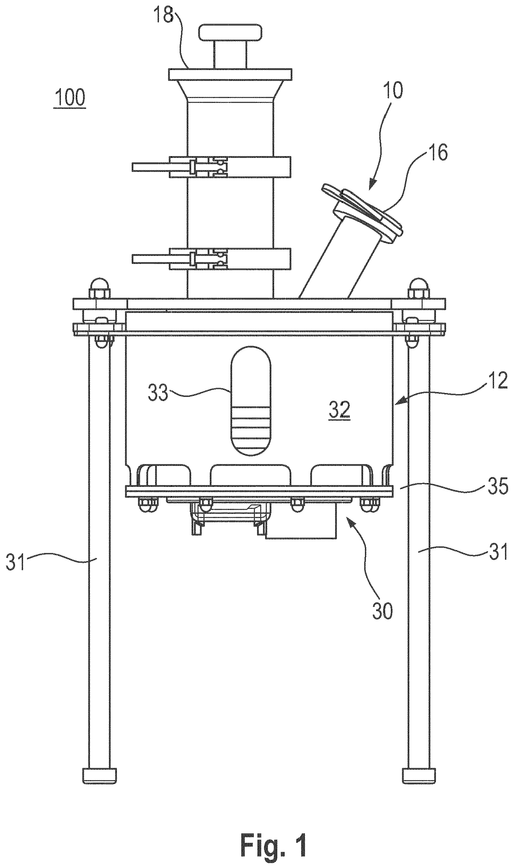

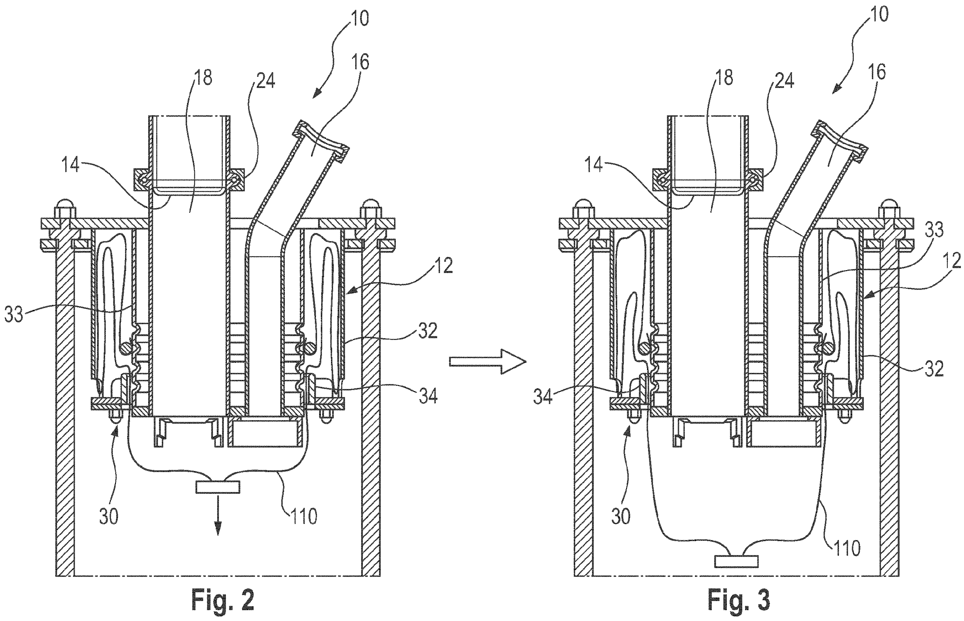

Figur 1 zeigt eine schematische Darstellung einer erfindungsgemä-ßen Probenehmeranschlussvorrichtung 100, der eine erfindungsgemä-ßen Befüllvorrichtung 10 umfasst, in einer Frontansicht. Ferner zeigen die Fig. 2 bis 6 eine schematische Darstellung der erfindungsgemäßen Befüllvorrichtung 10 von Fig. 1 in einer Schnittansicht.

In diesem Ausführungsbeispiel ist die erfindungsgemäße Probenehmeranschlussvorrichtung 100 zur kontaminationsfreien Entnahme einer Probe eines Produkts aus einem nachfolgend noch näher beschriebenen Behältnis 110, wie es beispielsweise in den Fig. 2 und 3 veranschaulicht ist, vorgesehen. Zu diesem Zweck weist die Probenehmeranschlussvorrichtung 100 die erfindungsgemäße Befüllvorrichtung 10 sowie das Behältnis 110 zur Aufnahme einer Probe auf.

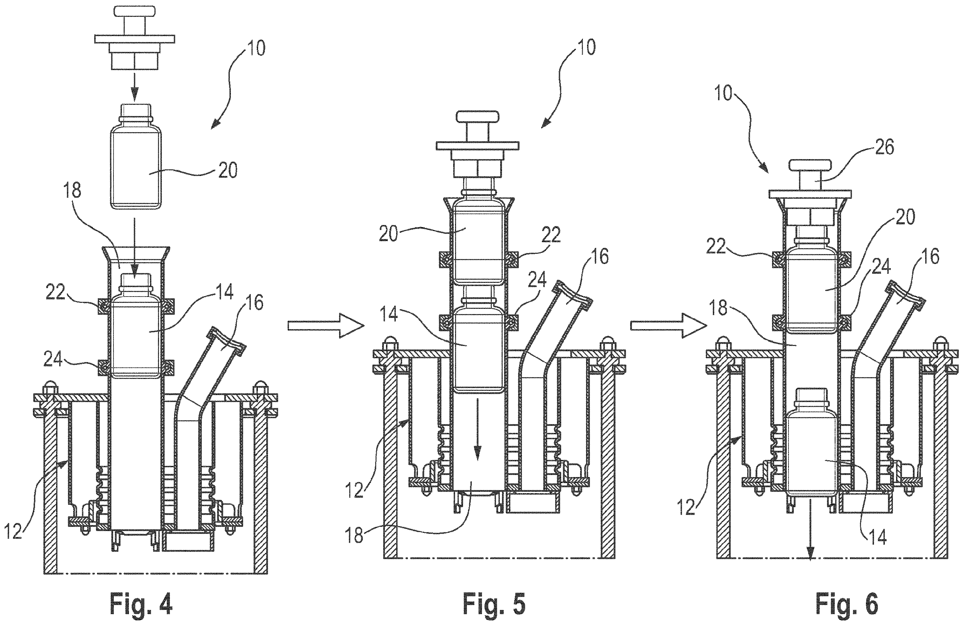

Die erfindungsgemäße Befüllvorrichtung 10 ist unterdessen zum Befüllen mindestens eines nachstehend noch näher erläuterten Behälters 14, 20, in diesem Ausführungsbeispiel eines ersten Behälters 14 und eines zweiten Behälters 20, die jeweils zur Aufnahme einer Probe eines Produkts vorgesehen sind, eingerichtet, wie in den Fig. 4 bis 6 dargestellt ist.

Im in den Fig. 1 bis 6 dargestellten Fall ist die erfindungsgemäße Befüllvorrichtung 10 als ein sogenannter Anschlusskopf ausgebildet.

Die als Anschlusskopf ausgebildete Befüllvorrichtung 10 umfasst eine Probenbefülleinrichtung bzw. Befülleinrichtung 12 mit einem ersten Durchgang 16, über den der nachstehend noch näher beschriebene erste Behälter 14 oder zweite Behälter 20 mit einer Probe eines Produkts befüllt werden kann. Insbesondere ist der Durchgang 16 als ein Produkt-Fallrohr bzw. Fallrohr ausgebildet, das mit einem Triclamp-Anschluss an dessen umgebungsseitigen Endabschnitt zur Anbindung eines zusätzlichen Rohrstücks verbindbar ist, um an einen Schlittenprobenehmer oder Schneckenprobenehmer angeschlossen werden zu können.

Darüber hinaus umfasst die Befülleinrichtung 12 einen zweiten Durchgang 18, der derart ausgestaltet ist, dass erste Behälter 14 oder der zweite Behälter 20 von außen bzw. von der Umgebung in den zweiten Durchgang 18 eingeführt werden kann, um den zweiten Durchgang 18 hermetisch zu verschließen.

Wie weiterhin den Fig. 4 bis 6 entnommen werden kann, ist der zweite Durchgang 18 zu diesem Zweck derart ausgestaltet, dass der in den zweiten Durchgang 18 eingeführte erste Behälter 14 oder zweite Behälter 20 innerhalb des zweiten Durchgangs 18 in eine erste Dichtungsposition, eine zweite Dichtungsposition und eine dritte Dichtungsposition verschiebbar ist, in denen der erste Behälter 14 oder der zweite Behälter 20 den zweiten Durchgang 18 hermetisch verschließt, indem der erste Behälter 14 oder der zweite Behälter 20 in Abhängigkeit von der jeweiligen Dichtungsposition mit einem unterschiedlichen Dichtungselement 22, 24 oder mehreren unterschiedlichen Dichtungselementen 22, 24 in Wirkverbindung steht, wie nachstehend noch näher erläutert wird.

Wie insbesondere den Fig. 4 bis 6 entnommen werden kann, sind im dargestellten Fall in dem zweiten Durchgang 18 zumindest zwei in einem vorbestimmten Abstand zueinander angeordnete Dichtungselemente 22, 24 in Axialrichtung des zweiten Durchgangs 18 angeordnet. Selbstverständlich kann es sich bei den in dem vorbestimmten Abstand zueinander angeordneten Dichtungselemente 22, 24 jeweils um mehrere Dichtungselemente bzw. Dichtungselementgruppen mit mehreren Dichtungselementen handeln.

Wie weiterhin in den Fig. 4 bis 6 erkennbar ist, sind die Dichtungselemente 22, 24 derart voneinander beabstandet, dass der jeweilige erste oder zweite Behälter 14, 20 in der ersten Dichtungsposition in Zusammenwirken mit nur dem einen der zwei Dichtungselemente 22, 24, nämlich dem oberen Dichtungselement 22, den zweiten Durchgang 18 hermetisch verschließt (siehe zweiten Behälter 20 in Fig. 5), in der zweiten Dichtungsposition in Zusammenwirken mit den zwei Dichtungselementen 22, 24, nämlich dem oberen Dichtungselement 22 und dem unteren Dichtungselement 24, den zweiten Durchgang 18 hermetisch verschließt (siehe ersten Behälter 14 in Fig. 4 oder zweiten Behälter 20 in Fig. 6), und in der dritten Dichtungsposition in Zusammenwirken mit nur dem anderen der zwei Dichtungselemente 22, 24, nämlich dem unteren Dichtungselement 24, den zweiten Durchgang 18 hermetisch verschließt (siehe ersten Behälter 14 in Fig. 5).

Wie vorstehend angedeutet, ist in der Abfolge der Fig. 4 bis 6 erkennbar, dass der zweite Durchgang 18 derart ausgebildet ist, dass bei in zweiter Dichtungsposition befindlichem ersten Behälter 14 und bei Einführen des zweiten Behälters 20 in den zweiten Durchgang 18 und Verschieben in die erste Dichtungsposition der erste Behälter 14 von der zweiten Dichtungsposition in die dritte Dichtungsposition geschoben wird, so dass zum einen der zweite Behälter 20 in der ersten Dichtungsposition und zum anderen der erste Behälter 14 in der dritten Dichtungsposition mit einem jeweiligen Dichtungselement 22, 24 zusammenwirken, um den zweiten Durchgang 18 hermetisch zu verschließen, wie es in Fig. 5 dargestellt ist.

Wie ebenso vorstehend bereits angedeutet, kann den Fig. 4 und 6 entnommen werden, dass der zweite Durchgang 18 in diesem Ausführungsbeispiel derart ausgebildet ist, dass bei in zweiter Dichtungsposition befindlichem ersten oder zweiten Behälter 14 oder 20 der zweite Durchgang 18 ausschließlich über nur einen Behälter 14 oder 20 hermetisch verschließbar ist.

Vorzugsweise sind die Dichtungselemente 22, 24 im dargestellten Fall durch aus dem Stand der Technik bekannte sog. Clampdichtungen gebildet. Die Clampdichtungen sind mit reduziertem Innendurchmesser in Bezug auf den Durchgang 18 ausgebildet, um eine ausreichende Dichtwirkung bei eingeschobenem Behälter 14, 20 in Form einer Probenahmeflasche zu gewährleisten, sowie diesen auch in der entsprechenden Dichtungsposition zu haltern.

Dementsprechend bildet der zweite Durchgang 18 eine Art "Pushthrough-Rohr" zum Einbringen der Behälter 14, 20 in Form von Probenahmeflaschen.

Wie darüber hinaus insbesondere in den Fig. 2 und 3 ersichtlich ist, weist der Anschlusskopf weiterhin eine nachfolgend noch näher erläuterte Halterungseinrichtung zum Haltern des flexiblen Behältnisses 110, insbesondere eines Liners oder einer Endlosfolie, auf, in das der erste Durchgang 16 und der zweite Durchgang 18 münden. Im dargestellten Fall ist die Halterungseinrichtung daher ein sogenannter Liner- oder Folienträger zum Haltern des flexiblen Behältnisses 110 in Form eines Liners bzw. einer Endlosfolie. Wie nachstehend noch nähert erläutert wird, ist eine Außenrohr 32 des Linerträgers mittels eines Bajonettverschlusses an Führungsbolzen 31 gelagert, wie insbesondere in Fig. 1 erkennbar ist, und entlang der Führungsbolzens 31 translatorisch verschiebbar, wenn der Bajonettverschluss gelöst ist.

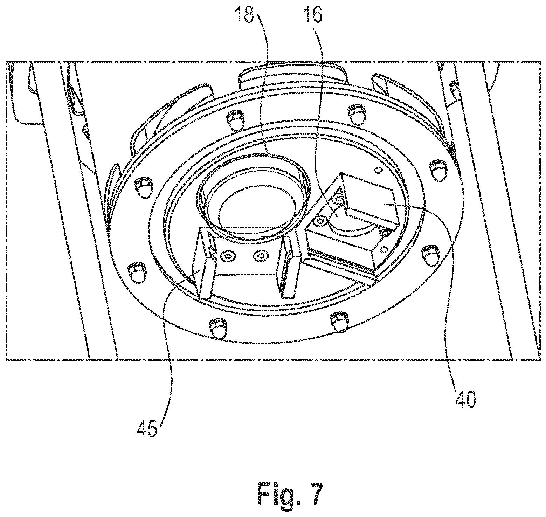

Wie ferner in Fig. 1 ersichtlich ist, weist die Halterungseinrichtung in Form des Linerträgers mindestens ein zylindrisches Rohrstück 32 auf, wobei ein Ausschnitt an der Außenfläche des Rohrstücks 32 eine Aussparung ausbildet, die als Sichtfenster zur Kontrolle des Linerpakets dient, das innerhalb des Rohrstücks 32 aufgenommen ist. Ferner ist in Fig. 1 erkennbar, dass an einer Unterseite des Anschlusskopfs eine Grundplatte 35 angebracht ist, die insbesondere für weitere Einrichtungen vorgesehen sein kann. Insbesondere ist an der Unterseite des Anschlusskopfs eine Einrichtung 45 zum Lösen und Befestigen eines Deckels eines Behälters 14, 20 in Form eines Deckelhalters und eine Befestigungseinrichtung 40 zum Befestigen eines offenen Behälters 14, 20 an der Mündung des ersten Durchgangs 16 vorgesehen, wie besonders deutlich in Fig. 7 erkannt werden kann, in der die Unterseite des Anschlusskopfs perspektivisch in schematischer Ansicht dargestellt ist.

Anhand des vorstehend beschriebenen Aufbaus der Befüllvorrichtung kann eine Probenehmeranschlussvorrichtung, insbesondere eine Containment-Probenehmeranschlussvorrichtung, mit Push-through-Funktion für Behälter in Form von Flaschen zur Verfügung gestellt werden. Die Containment-Probenehmeranschlussvorrichtung mit Push-through-Funktion zur Flaschenaufgabe bildet somit eine kompakte Variante zum sicheren Einschleusen von definierten, zylindrischen Behältern wie Probenahmeflaschen. Vorzugsweise sind die Behälter in Form von 500ml-Flaschen ausgebildet.

Die Funktionsweise bzw. der Betrieb der Containment-Probenehmeranschlussvorrichtung 100 bzw. der Befüllvorrichtung 10 gestaltet sich wie folgt:
Prinzipiell wird die vorstehend beschriebene Befüllvorrichtung 10 mit einem Verfahren betrieben, das unter anderem in dieser Abfolge einen Behältereinführungsschritt und einen anschließenden Behälterbefüllungsschritt aufweist.

Der Behältereinführungsschritt wird durchgeführt, indem der erste Behälter 14 zunächst in den zweiten Durchgang 18 der Befülleinrichtung 12 eingeführt wird, um den zweiten Durchgang 18 hermetisch zu verschließen. Insbesondere wird bei dem Behältereinführungsschritt weiterhin der zweite Behälter 20 in den zweiten Durchgang 18 eingeführt, so dass zunächst der erste und der zweite Behälter den zweiten Durchgang 18 hermetisch verschließen, wobei bei weiterem Einführen des zweiten Behälters 20 in den zweiten Durchgang 18 der erste Behälter 14 aus dem zweiten Durchgang 18 herausgeführt wird und ausschließlich der zweite Behälter 20 sodann den zweiten Durchgang 18 hermetisch verschließt.

In dem Behälterbefüllungsschritt wird, sofern der zweite Durchgang 18 von dem nachgeschobenen zweiten Behälter 20 hermetisch verschlossen ist, der erste Behälter 14 durch den zweiten Durchgang 18 durchgeschoben, um über den ersten Durchgang 16 befüllt zu werden. Insbesondere wird der Behälterbefüllungsschritt durchgeführt, indem der erste Behälter 14 mit dem ersten Durchgang 16 der Befülleinrichtung 10 verbunden wird, um den ersten Behälter 14 über den ersten Durchgang 16 mit einer Probe zu befüllen.

Im Speziellen gestaltet sich das Verfahren wie folgt:
Neben der hier nicht näher beschriebenen Abfüllung einer gezogenen Probe eines Produkts über einen nicht veranschaulichten externen Probenehmer wie einen Schlittenprobenehmer oder Schneckenprobenehmer weist das Verfahren unter anderem die weiteren Verfahrensschritte betreffend das Nachziehen einer Folie bzw. Liners, das Flascheneinschleusen, die Reinigung der Containment-Probenehmeranschlussvorrichtung mittels einer WIP-Lanze (sog. Washing-In-Place-Lanze bzw. ) sowie einen Folien- bzw. Linerwechsel auf.

Der Verfahrensschritt betreffend das Nachziehen der Folie bzw. des Liners wird nachstehend im Zusammenhang mit den Fig. 2 und 3 näher erläutert. Dabei zeigen Figur 2 eine schematische Darstellung der erfindungsgemäßen Befüllvorrichtung von Fig. 1 in einer Schnittansicht bei einem Vorbereitungsschritt, nämlich dem Nachziehen der Folie, und Figur 3 eine schematische Darstellung der erfindungsgemäßen Befüllvorrichtung von Fig. 2 in einer Schnittansicht im weiteren Verlauf des Vorbereitungsschritts.

Vor dem Einschleusen eines neuen Behälters 14, 20 in Form einer neuen Probenahmeflasche muss das flexible Behältnis 110 in Form einer Endlosfolie oder eines sog. Liners nachgezogen werden, wie dies in den Fig. 2 und 3 veranschaulicht ist. Zu diesem Zweck wird am unteren Ende des abgebundenen flexiblen Behältnisses 110 bzw. Liners gezogen, wie in Fig. 1 durch den Pfeil nach unten angedeutet ist.

Das flexible Behältnis 110 bzw. der Liner faltet sich an einer Innenseite eines herkömmlichen Folienpakets ab, das in einem Aufnahmeraum zwischen einem Innenrohr 33 innerhalb des zylindrischen Rohrstücks 32 und dem zylindrischen Rohrstücks 32 gehaltert wird. Durch Abfalten bzw. Herabziehen des flexiblen Behältnisses 110 innerhalb des Aufnahmeraums wird ein entsprechender Abschnitt des flexiblen Behältnisses 110 durch einen Ringspalt zwischen dem Innenrohr 33 und dem zylindrischen Rohrstück 32 herausgezogen, wobei der Ringspalt an einem jeweiligen unteren Ende des Rohrstücks 32 und dem Innenrohr ausgebildet ist, wie in Fig. 2 und 3 zu erkennen ist. Dabei ist an dem Ringspalt eine umlaufende Flachdichtung 34 vorgesehen, die den entsprechenden Abschnitt des flexiblen Behältnisses 110 gegen das Innenrohr 33 drückt und dadurch den Aufnahmeraum bzw. den Innenraum des Behältnisses 110 gegen die Umgebung abdichtet. In Fig. 3 ist schließlich das abgefaltete bzw. herabgezogene flexible Behältnis 110 bzw. der herabgezogene Liner gezeigt.

Im nächsten Verfahrensschritt wird der Behältereinführungsschritt vorgenommen, welcher insbesondre das Einschleusen der Behälter 14, 20 in Form von Probenahmeflaschen bzw. das Flascheneinschleusen darstellt, was anhand der Fig. 4 bis 6 erläutert wird.

Dabei zeigen Figur 4 eine schematische Darstellung der erfindungsgemäßen Befüllvorrichtung von Fig. 1 in einer Schnittansicht bei einem Behältereinführungsschritt, Figur 5 eine schematische Darstellung der erfindungsgemäßen Befüllvorrichtung von Fig. 4 in einer Schnittansicht im weiteren Verlauf des Behältereinführungsschritts und Figur 6 eine schematische Darstellung der erfindungsgemäßen Befüllvorrichtung von Fig. 5 in einer Schnittansicht im weiteren Verlauf des Behältereinführungsschritts.

Wie bereits vorstehend beschrieben, wird der erste Behälter 14 in den Durchgang 18 eingeführt. Dabei gelangt der erste Behälter 14 zunächst in die erste Dichtungsposition, bei der der erste Behälter 14 mit dem oberen Dichtungselement 22 in Anlage gerät bzw. in Eingriff gelangt. Bei weiter Einführung bzw. weiterem Einschieben des ersten Behälters 14 in den Durchgang 18 gelangt dieser schließlich in die zweite Dichtungsposition, bei der der erste Behälter mit sowohl dem oberen Dichtungselement 22 als auch mit dem unteren Dichtungselement 24 in Anlage gerät bzw. in Eingriff gelangt, wie dies in Fig. 4 veranschaulicht ist. In dieser als Grundstellung bezeichneten Position befindet sich der erste Behälter 14 somit im Eingriff mit den beiden als Clampdichtungen ausgeführten Dichtungselementen 22, 24 und dichtet dabei den Innenraum bzw. Aufnahmeraum des in Fig. 3 dargestellten nachunten gezogenen Behältnisses 110 doppelt ab.

Durch das Einbringen bzw. Einführen des zweiten Behälters 20 in den zweiten Durchgang 18 wird der erste Behälter 14 zunächst in die dritte Dichtungsposition, wie in Fig. 5 dargestellt ist, geschoben, so dass in dieser Stellung sowohl der erste Behälter 14 als auch der zweite Behälter 20 den zweiten Durchgang 18 hermetisch verschließen.

Bei weiterem Einbringen bzw. Einführen des zweiten Behälters 20 gelangt dieser schließlich in die zweite Dichtungsposition, bei der der zweite Behälter 20 sowohl mit dem oberen Dichtungselement 22 als auch mit dem unteren Dichtungselement 24 in Eingriff steht, wodurch der erste Behälter 14 weiter nach unten in den Aufnahmeraum bzw. Innenraum des Behältnisses 110 fällt, wie dies in Fig. 6 dargestellt ist. Dementsprechend steht der erste Behälter 14 somit zur Probenahme zur Verfügung, während der zweite Behälter 20 den zweiten Durchgang hermetische verschließt.

Wie in Fig. 4 bis 6 dargestellt ist, wird der zweite Behälter 20 vorzugsweise mit einer Art Kunststoff-Stößel 26 definiert nach unten geschoben, bis dieser durch beide Dichtungselemete 22, 24 gehalten wird, d.h. sich in der zweiten Dichtungsposition befindet.

Im nächsten Verfahrensschritt kann die sog. Probenahme vorgenommen werden, wie dies anhand von Fig. 7 veranschaulicht wird.

Figur 7 zeigt eine schematische Darstellung der erfindungsgemä-ßen Befüllvorrichtung von Fig. 1 in einer Ansicht von unten.

Der entsprechend den Fig. 4 bis 6 eingeschleuste, verschlossene erste Behälter 14 befindet sich in dem Innenraum bzw. Aufnahmeraum des nachgezogenen bzw. abgefalteten Behältnisses 110, d.h. innerhalb des Liners bzw. der Folie unterhalb des Anschlusskopfs bzw. an dessen Unterseite. Der Innenraum bzw. Aufnahmeraum des Liners bzw. der Folie ist somit hermetisch verschlossen.

Wie in Fig. 7 veranschaulicht ist, sind dort eine Einrichtung 45 zum Lösen und Befestigen bzw. Haltern eines Deckels des ersten Behälters 14 und eine Befestigungseinrichtung 40 zum Befestigen des offenen bzw. geöffneten ersten Behälters 14 an dem ersten Durchgang 16 vorgesehen.

Die Einrichtung 45 zum Lösen und Befestigen des Deckels ist in Form eines Deckelhalters ausgebildet. Um den Deckel des ersten Behälters 14 zu öffnen, wird der Deckel seitlich in den Deckelhalter geschoben. Durch einen Formschluss einer Verzahnung des Deckels zu den Seitenwänden des Deckelöffners wird der Deckel an dem Deckelhalter fixiert, wodurch der erste Behälter 14 zum Öffnen desselbigen gedreht werden kann. Dabei verbleibt der Deckel nach Öffnung des ersten Behälters 14 am Deckelhalter.

Der geöffnete erste Behälter 14 wird als nächstes in einer Probenahmeposition an der Befestigungseinrichtung 40 zum Befestigen des offenen bzw. geöffneten ersten Behälters 14 an dem ersten Durchgang 16 fixiert. Dabei kann die Befestigungseinrichtung 40 in unterschiedlichen Varianten ausgebildet sein. In einer Variante kann die Befestigungseinrichtung 40 ähnlich wie der Deckelhalter ausgebildet sein. Zu diesem Zweck kann ein umlaufender Falz an dem ersten Behälter 14 als Aufnahme genutzt werden. In einer weiteren Variante kann die Befestigungseinrichtung 40 als eine Art Gewindestück ausgestaltet sein, so dass der erste Behälter 14 mit einem Gegengewindestück in das Gewindedstück eingeschraubt wird, um mit dem ersten Durchgang 16 zur Probenahme verbunden zu werden.

Nach der Probenahme wird der somit mit einer Probe gefüllte erste Behälter von der Probenahmeposition entnommen und der Deckel im Deckelhalter wird erneut aufgeschraubt.

Das flexible Behältnis 110 bzw. der Liner, in dessen Innenraum bzw. Aufnahmeraum sich der gefüllte erste Behälter 14 befindet, wird daraufhin doppelt abgebunden und abgetrennt. Damit gelangt man schließlich wieder zu dem Zustand der Befüllvorrichtung, der in Fig. 2 gezeigt ist.

Der Probenahmeprozess, insbesondere mit den vorstehend beschriebenen Verfahrensschritten, kann somit erneut von vorne vorgenommen werden, so oft wie erforderlich.

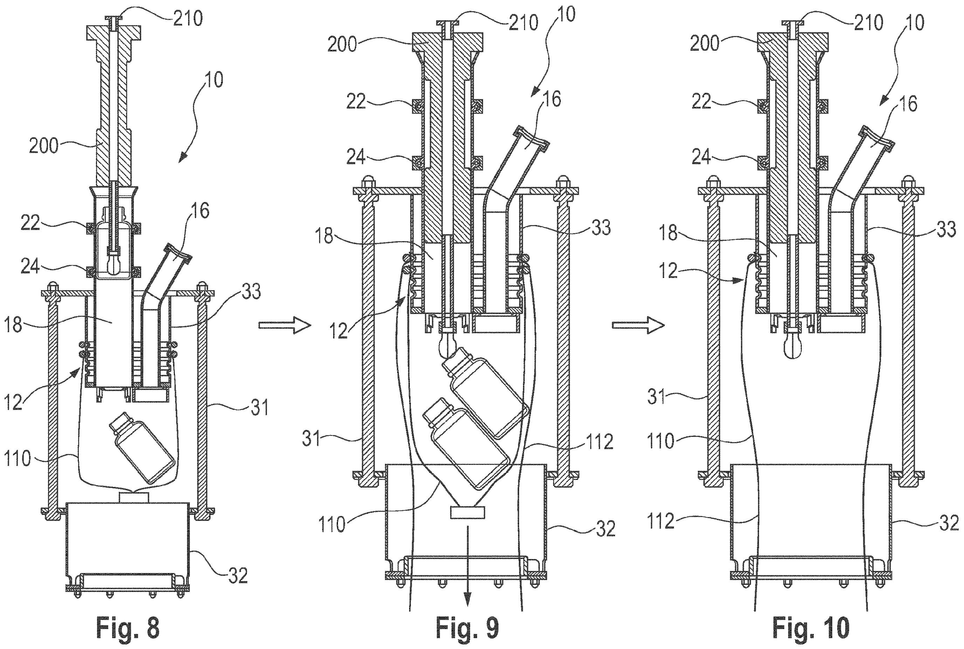

Sofern die Probenahme beendet wird, kann eine Reinigung der Befüllvorrichtung 100 vorgenommen werden. Der Verfahrensschritt betreffend die Reinigung der Befüllvorrichtung 100 wird nachstehend im Zusammenhang mit den Fig. 8 bis 10 beschrieben.

Dabei zeigen Figur 8 eine schematische Darstellung der erfindungsgemäßen Befüllvorrichtung 100 von Fig. 1 in einer Schnittansicht bei einem Reinigungsschritt, sowie Figuren 9 und 10 schematische Darstellungen der erfindungsgemäßen Befüllvorrichtung von Fig. 8 in einer Schnittansicht im weiteren Verlauf des Reinigungsschritts.

Zur Reinigung der Befüllvorrichtung 100 wird zunächst der Linerträger, d.h. das zylindrische Rohrstücks 32, über den Bajonettverschluss gelockert und an den Führungsbolzen 31 bis zu einem unteren Anschlag nach unten gefahren, wie dies in Fig. 8 beispielsweise veranschaulicht ist.

Das restliche flexible Behältnis 110 bzw. der restliche Liner wird abgebunden, abgeschnitten und entfernt. Es verbleibt lediglich eine sogenannte Showercap auf dem Innenrohr 33, d.h. der letzte verbleibende Teil des Liners ist als eine Art Kappe an dem Innenrohr 33 befestigt und bildet den Abschluss des Liners.

Unter der Befüllvorrichtung 100 wird nun ein nicht dargestellter Behälter gestellt, beispielsweise in Form eines Fasses oder ähnlichem, wobei der Behälter einen neuen Folienbeutel bzw. Linerbeutel 112 beinhaltet. Der neue Folienbeutel bzw. Linerbeutel 112 wird durch die Öffnung des Linerträgers bzw. des zylindrischen Rohrstücks 32 geschoben und an einer O-Ring-Nut des Innenrohrs 33 angebracht, wie dies in Fig. 9 veranschaulicht ist. Dabei ist zu berücksichtigen, dass der neue Linerbeutel 112 oberhalb des restlichen Liners 110 befestigt wird.

Ein geöffneter Behälter in Form einer Flasche ohne Deckel wird in den zweiten Durchgang 18 geschoben, so dass sich der vorher dort befindliche Behälter in Form einer Flasche in die vorgenannte Showercap fällt, wie in Fig. 8 dargestellt ist.

Eine Waschlanze 200 ist eine Kombination aus einem Kunststoffteil, sowie einem Rohr mit Waschdüse. Das Rohr mit der Waschdüse wird in den geöffneten Behälter geschoben und die ganze Einheit nach unten gedrückt. Die Waschdüse greift so in die Dichtungselemente 22, 24 in Form der Clampdichtungen so ein, dass die Befüllvorrichtung 200 ständig verschlossen ist. Der offene Behälter fällt ebenfalls nach unten in die Showercap. Am oberen Ende der Waschlanze 200 befindet sich ein O-Ring, der den zweiten Durchgang 18 final abdichtet. Nachdem die Waschlanze 200 komplett eingeschoben ist, kann die Showercap mit den Behältern abgezogen werden. Diese befindet sich dann in dem Folienbeutel bzw. Linerbeutel 112, der die verschmutzte Waschflüssigkeit auffängt.

Durch einen oben angebrachten Clamp-Stutzen 210 wird das Waschmedium in die Waschlanze 200 eingebracht und die Befüllvorrichtung durch die rotierende Düse gereinigt. Eine breite Eindrehung in der WIP-Lanze in Verbindung mit drei kleinen Bohrungen ermöglicht es, den Zwischenraum zwischen den Clamp-Dichtungen ebenfalls mit Waschflüssigkeit zu benetzen. Schließlich kann der verschmutzte Folienbeutel bzw. Linerbeutel 112 abgebunden und abgetrennt werden, wobei der an der Befüllvorrichtung 10 verbleibende Teil aufgrund der vorherigen Reinigung ohne weiteres abgenommen werden kann, da dieser ebenso wie das Fallrohr mit dem Reinigungsmedium benetzt ist. Dementsprechend kann das Fallrohr zum Trocknen und Nachwischen abgebaut werden.

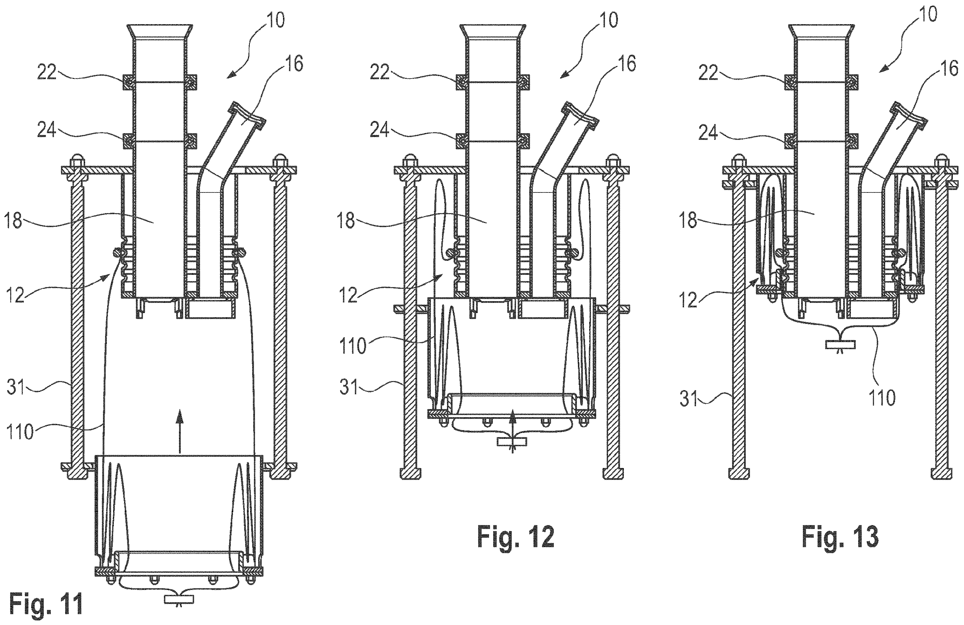

Sofern das flexible Behältnis 110 aufgebracht ist, wird ein Verfahrensschritt bezüglich des Behältniswechsels bzw. Folien- oder Linerwechsels erforderlich. In diesem Zusammenhang zeigen Figur 11 eine schematische Darstellung der erfindungsgemäßen Befüllvorrichtung von Fig. 1 in einer Schnittansicht bei einem Behältniswechselschritt und Figur 12 eine schematische Darstellung der erfindungsgemäßen Befüllvorrichtung von Fig. 11 in einer Schnittansicht im weiteren Verlauf des Behältniswechselschritts, und Fig. 13 eine schematische Darstellung der erfindungsgemäßen Befüllvorrichtung von Fig. 12 in einer Schnittansicht im weiteren Verlauf des Behältniswechselschritts.

Der Behältniswechselschritt, auch Linerwechsel oder Folienwechsel genannt, erfolgt entweder nach dem vorgenannten Reinigungsschritt bzw. Waschvorgang oder wenn die Länge des eingelegten Liners für eine weitere Verwendung nicht ausreicht. Der Linerträger wird dann über den Bajonettverschluss entriegelt und nach unten gefahren (identisch zum Wasch- bzw. Reinigungsvorgang), wie in Fig. 11 dargestellt.

Das neue Linerpaket wird in den Linerhalter eingelegt und das äu-ßere Linerende wird nach oben über das Innenrohr 33 gestülpt. Hier wird der neue Liner in einer oberen O-Ring-Nut des Innenrohrs 33 befestigt. Das innere Linerende wird durch den Linerträger ein Stück nach unten gezogen und abgebunden. Nun wird der Linerträger nach oben geschoben und zunächst, wie in Fig. 12 dargestellt, in einer mittleren Position (Zwischenposition) arretiert, beispielweise über eine in den Führungsbolzen 31 vorgesehene Eindrehung zur Arretierung oder einer sonstigen herkömmlichen Arretierungseinrichtung, um den Liner nochmals positionieren zu können, um ein Verklemmen des Liners bei vollständig nach oben geschobenen Linerträger zu vermeiden. Schließlich wird der Linerträger, wie in Fig. 13 gezeigt, in der oberen Position verriegelt. Dabei ist zu berücksichtigen, dass das Linerpaket nicht eingeklemmt wird, was durch das erneute Positionieren in der mittleren Position weitgehend vermieden werden kann.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

## Patentansprüche

1. Befüllvorrichtung (10) zum Befüllen eines Behälters (14, 20) zur Aufnahme einer Probe eines Produkts, aufweisend:
eine Befülleinrichtung (12) mit einem ersten Durchgang (16), über den ein erster Behälter (14) mit einer Probe eines Produkts befüllt werden kann,
wobei die Befülleinrichtung (12) einen zweiten Durchgang (18) aufweist, der derart ausgestaltet ist, dass der erste Behälter (14) in den zweiten Durchgang (18) eingeführt werden kann, um den zweiten Durchgang (18) hermetisch zu verschließen, und/oder dass der erste Behälter (14) durch den zweiten Durchgang (18) durchgeschoben werden kann, um über den ersten Durchgang (16) befüllt zu werden.

2. Befüllvorrichtung (10) gemäß Anspruch 1, wobei der zweite Durchgang (18) derart ausgestaltet ist, dass der in den zweiten Durchgang (18) eingeführte erste Behälter (14) innerhalb des zweiten Durchgangs (18) in eine erste Dichtungsposition, eine zweite Dichtungsposition und eine dritte Dichtungsposition verschiebbar ist, in denen der erste Behälter (14) den zweiten Durchgang (18) hermetisch verschließt, indem der erste Behälter (14) in Abhängigkeit von der jeweiligen Dichtungsposition mit einem unterschiedlichen Dichtungselement oder mehreren unterschiedlichen Dichtungselementen (22, 24) in Wirkverbindung steht.

3. Befüllvorrichtung (10) gemäß Anspruch 2, wobei in dem zweiten Durchgang (18) zumindest zwei in einem vorbestimmten Abstand zueinander angeordnete Dichtungselemente (22, 24) in Axialrichtung des zweiten Durchgangs (18) angeordnet sind, die derart voneinander beabstandet sind, dass der erste Behälter (14) in der ersten Dichtungsposition in Zusammenwirken mit nur dem einen der zumindest zwei Dichtungselemente (22, 24) den zweiten Durchgang (18) hermetisch verschließt, in der zweiten Dichtungsposition in Zusammenwirken mit den zumindest zwei Dichtungselementen (22, 24) den zweiten Durchgang (18) hermetisch verschließt, und in der dritten Dichtungsposition in Zusammenwirken mit nur dem anderen der zumindest zwei Dichtungselemente (22, 24) den zweiten Durchgang (18) hermetisch verschließt

4. Befüllvorrichtung (10) gemäß Anspruch 3, wobei der zweite Durchgang (18) derart ausgebildet ist, dass bei in zweiter Dichtungsposition befindlichem ersten Behälter und bei Einführen eines zweiten Behälters (20) in den zweiten Durchgang (18) und Verschieben in die erste Dichtungsposition der erste Behälter (14) von der zweiten Dichtungsposition in die dritte Dichtungsposition geschoben wird, so dass sowohl der zweite Behälter (20) in der ersten Dichtungsposition als auch der erste Behälter (14) in der dritten Dichtungsposition mit einem jeweiligen Dichtungselement (22, 24) zusammenwirken, um den zweiten Durchgang (18) hermetisch zu verschließen.

5. Befüllvorrichtung (10) gemäß Anspruch 4, wobei der zweite Durchgang (18) derart ausgebildet ist, dass bei in zweiter Dichtungsposition befindlichem ersten oder zweiten Behälter der zweite Durchgang (18) ausschließlich über nur einen Behälter hermetisch verschließbar ist.

6. Befüllvorrichtung (10) gemäß einem der Ansprüche 2 bis 4, wobei die Dichtungselemente durch Clampdichtungen gebildet werden.

7. Befüllvorrichtung (10) gemäß einem der vorangehenden Ansprüche, wobei die Befülleinrichtung als Anschlusskopf ausgebildet ist, der den ersten Durchgang und den zweiten Durchgang aufweist, wobei der Anschlusskopf weiterhin eine Halterungseinrichtung zum Haltern eines flexiblen Behältnisses aufweist, in das der erste Durchgang und der zweite Durchgang münden.

8. Befüllvorrichtung (10) gemäß Anspruch 7, wobei der Anschlusskopf eine Einrichtung (45) zum Lösen und Befestigen eines Deckels eines Behälters und/oder eine Befestigungseinrichtung (40) zum Befestigen eines offenen Behälters an dem ersten Durchgang (16) aufweist.

9. Probenehmeranschlussvorrichtung zur kontaminationsfreien Entnahme einer Probe eines Produkts aus einem Behältnis, aufweisend:
eine Befüllvorrichtung (10) gemäß Anspruch einem der vorangehenden Ansprüche, und
einem Behältnis zur Aufnahme einer Probe.

10. Verfahren zum Betreiben einer Befüllvorrichtung (10) zum Befüllen eines Behälters (14, 20) zur Aufnahme einer Probe eines Produkts, vorzugsweise einer Befüllvorrichtung gemäß einem der vorangehenden Ansprüche, wobei das Verfahren die folgenden Schritte aufweist:
einen Behälterbefüllungsschritt, bei dem ein erster Behälter mit einem ersten Durchgang (16) der Befülleinrichtung verbunden wird, um den ersten Behälter (14) über den ersten Durchgang (16) mit einer Probe zu befüllen,
wobei vor dem Behälterbefüllungsschritt ein Behältereinführungsschritt durchgeführt wird, bei dem der erste Behälter (14) zunächst in einen zweiten Durchgang (18) der Befülleinrichtung (12) eingeführt wird, um den zweiten Durchgang (18) hermetisch zu verschließen.

11. Verfahren nach Anspruch 10, wobei in dem Behältereinführungsschritt weiterhin ein zweiter Behälter (20) in den zweiten Durchgang (18) eingeführt wird, so dass zunächst der erste und der zweite Behälter den zweiten Durchgang (18) hermetisch verschließen, wobei bei weiterem Einführen des zweiten Behälters in den zweiten Durchgang (18) der erste Behälter aus dem zweiten Durchgang herausgeführt wird und ausschließlich der zweite Behälter den zweiten Durchgang hermetisch verschließt.

12. Verfahren zum Reinigen einer Befüllvorrichtung (10) zum Befüllen eines Behälters (14, 20) zur Aufnahme einer Probe eines Produkts, vorzugsweise einer Befüllvorrichtung gemäß einem der vorangehenden Ansprüche, wobei das Verfahren die folgenden Schritte aufweist:
einen Behältereinführungsschritt, bei dem ein erster Behälter (14), der ausgebildet ist, mit einem ersten Durchgang (16) der Befülleinrichtung verbunden zu werden, um den ersten Behälter (14) über den ersten Durchgang (16) mit einer Probe zu befüllen, in einen zweiten Durchgang (18) der Befülleinrichtung (12) eingeführt wird, um den zweiten Durchgang (18) hermetisch zu verschließen,
einen Reinigungsschritt, bei dem eine Reinigungseinrichtung (200) in den zweiten Durchgang (18) eingeführt wird, um den zweiten Durchgang (18) hermetisch zu verschließen, und bei deren Einführung in den zweiten Durchgang (18) der erste Behälter (14) abschnittsweise oder vollständig aus dem zweiten Durchgang (18) geschoben wird.
